# EUROPEAN PATENT APPLICATION

(11) **EP 1 669 747 A1**
(43) Date of publication of application: **14.06.2006**
(21) Application number: 04029141.1
(22) Date of filing: 09.12.2004
(51) Int. Cl.: G01N 27/407

(54) **Formation of highly porous gas-sensing layers by deposition of nanoparticles produced by flame spray pyrolysis**

(71) Applicant: ETH Zürich, 8092 Zürich (CH)
(72) Inventor: Mädler, Lutz, 8003 Zürich (CH); Pratsinis, Sotiris, 8032 Zürich (CH); Rössler, Albert, 6020 Innsbruck (AT); Weimar, Udo, 72072 Tübingen (DE); Barsan, Nicolae, 72076 Tübingen (DE); Gurlo, Aleksander, 72076 Tübingen (DE)
(74) Representative: Kohler Schmid Möbus

(57) **Abstract**

The invention relates to a method of producing a gas sensor comprising the steps of
a. Positioning a sensor substrate (7) in a flame spray pyrolysis apparatus (1);
b. Generating an aerosol phase comprising sensing material nanoparticles by flame spray pyrolysis (FSP) of a precursor substance;
c. Depositing the sensing material particles contained in the aerosol, in particular nanoparticles of the sensing material, onto the sensor substrate (7) directly from the aerosol phase to form a porous sensing layer (15).

A gas sensor and a sensor fabrication system are also described.

## Description

The invention relates to a method of producing a gas sensor, a gas sensor, and a flame spray reactor.

Although many different metal oxides have been investigated as sensing materials for semi-conducting gas sensors, tin oxide (SnO₂)-based sensors are the most commonly used. Different deposition/sensitive layer fabrication techniques have already been tested. The successful sensors are generally those with thick (several tens of micrometers) nano-crystalline (about ten nanometer) films. State-of-the-art sensors are based on pre-processed powders generally obtained through wet chemistry routes such as sol-gel decomposition of organometallic precursors and hydrothermal treatment of colloidal solutions. These are further functionalized by adding small quantities of well dispersed noble metals in the form of surface additives. For these materials, deposition methods have been developed that are compatible with both classical thick-film and silicon thin-film technologies substrates.

State-of-the-art sensors have important technical limitations that are generally related to the way in which the sensitive materials are processed. For example, the wet chemistry methods employed for both preparation and functionalization of base materials are difficult to control and as a result both the size distribution in the base material, and the amount and distribution of the noble metal additives, are rather broad. This results in significant variation of gas-sensing properties from batch to batch (30 % variation is common in the industry). The fabrication of the sensitive materials is labour and time intensive, with typical batch production times on the order of days with small batch volumes in the range of 100 g. Furthermore, the deposition of sensing layers, either by classical screen-printing or more sophisticated drop deposition techniques, is performed after the additional step of combining the sensitive material with organic carriers. This increases processing time and costs related to deposition equipment and handling. Recent advances have been made using electro-spray deposition for sensor applications but limitations include processing time and the required post-processing to obtain nano-crystalline material. Additionally, variations in the deposition parameters such as new layer, layer stacks (two or more layers on top of each other) or varying layer thickness are difficult to implement and require repetition of the full process.

In JP 2002 323 473 a process of depositing a functionalized covering (protective) layer on a sensing layer by means of plasma flame spraying is described. However, this process involves plasma and results in a protective instead of a sensing layer, and, therefore, is different to this invention. Furthermore, separate processing steps for creating the sensing layer and the covering layer are involved.

In JP 2002 310 983 a gas sensor is described which has an electrolyte sensing layer coated with a ceramic by plasma flame spraying. However, this process involves plasma and focuses on the enhancement of the reliability and selectivity of a solid electrolyte gas sensor, and, therefore, differs from the direct formation of a highly porous gas sensing layer as described in this invention.

It is the object of the invention to provide a simplified method of fabricating a gas sensor.

This object is achieved by a method with the features of claim one. Advantageous variants are given in claims 2 - 11.

Within the scope of the invention also falls a sensor with the features of claim 12. Preferred embodiments are described in claims 13 - 15.

The invention also relates to a sensor fabrication system having the features of claim 16. Advantageous embodiments are described in claims 17 and 18.

Flame spray pyrolysis (FSP) can be successfully employed for the preparation of metal oxide, in particular SnO₂ nanoparticles for gas-sensing applications. Single crystalline (tin) oxide particles of about 20 nm size can be produced with FSP. FSP has the advantages of direct control of particle size and the ability to completely manufacture nano-powders in a single high-temperature step without further processing of the microstructure and noble metal particle size in subsequent annealing steps in contrast to conventional spray pyrolysis or wet methods in general. The main advantage of this invention is the use of the FSP technology for directly depositing metal oxide nanoparticles, e. g. SnO₂, and/or mixed metal oxide nanoparticles (where more than one metal compound is present within a single particle), e.g. ZnO/SnO2 and/or functionalized (mixed) metal oxide nanoparticles, e.g. Pt/SnO₂ or Pt/ZnO/SnO2, from the aerosol phase onto sensor substrates.

According to the invention multiple particle deposition from the aerosol phase is achieved. FSP is used for direct *(in-situ)* deposition of pure and functionalized (doped) sensing materials. Functionalization is a kind of doping, i.e. a surface doping, which is different from semiconductor doping. Functionalization occurs by in-situ deposition of noble metals and/or metal oxides and/or mixed metal oxides, different from the metal oxide or mixed metal oxide of the bulk sensing layer, to the particles of the sensing layer. As mentioned above, current state-of-the-art sensors have important technical limitations, which are partly related to the deposition procedure performed after the additional step of combining the sensitive material with organic carriers. This adds both processing time and cost related to the deposition equipment and handling. Additionally, variations in the deposition parameters such as including a new layer, layer stacks (two or more layers on top of each other), or varying layer thickness or functionalization (doping) of the layers and batch production are difficult to implement and require repetition of the full process. Using the inventive *in-situ* FSP deposition technique eliminates these difficulties and functionalization of the sensing layers can be realized during a single processing step on ceramic (planar) and micro-machined substrates by using appropriate masks. The method is in principle applicable to all materials that are able to be synthesized by FSP, and in principle any kind of substrate may be used for gas sensor fabrication.

An inventive sensor fabrication system including a flame spray reactor may be used to produce metal oxide nanoparticles, e. g. SnO₂ and mixed metal oxide nanoparticles, e.g. ZnO/SnO2, and possibly for functionalizing of those, e. g. to produce Pt/SnO₂ Pt/ZnO/SnO2 nanoparticles by the flame spray pyrolysis (FSP) method. Product particles are directly deposited on a sensor substrate.

Product particles may be directly deposited on e.g. alumina substrates with prefabricated electrode assemblies. Each sensor substrate may consist of interdigitated electrodes, e.g. Pt-electrodes, on the front side and heater on the back side and an active sensing area of 7.0 x 3.5 mm². With interdigitated electrodes a low geometry factor can be achieved for a given sensor area. A mask may be used to deposit the particles within the desired sensor area. The substrate may be mounted on a water-cooled copper block equipped with a thermocouple to enable control of the substrate temperature during the deposition process. The substrate temperature may be maintained at, for example, *T*_{*sub*} = 120°C in order to avoid water condensation on the substrate. This may be done by keeping the substrate holder at a constant temperature *(T*_{*sub*}*)*.

The deposition substrate is, for example, centred 200 mm above the nozzle in a face down orientation. At this position the gas temperature in front of the nozzle is, for example, *T*_{*gas*} = 500°C. Both temperatures *(T*_{*sub*} and *T*_{*gas*}*)* are preferably maintained throughout the deposition process. The liquid precursor is prepared, for example, by diluting tin(II) 2-ethylhexanoic acid in toluene to obtain a 0.5 M precursor solution. For Pt/SnO₂ synthesis, appropriate amounts of platinum acetylacetonate may be added to the solution.

The sensing layer is formed by particle transport in the flame environment and deposition on the substrate. Particles are transported towards the deposition area of the substrate by free and forced convection in the free-jet of the flame. The substrate is advantageously located at the stagnation point of the impinging jet.

Although diffusion of particles is sufficient in many cases, advantageously thermophoresis is used as the main mechanism of particle transport to the sensor substrate. As thermophoresis is not particle size dependent for particles smaller than 100 nm, the particles on the sensor are identical to those generated in the flame. Even at temperature differences between the gas and the sensor surface of 50 K and less (in the case of a deposition thickness of 100 µm) thermophoresis leads to an effective layer growth rate of about 0.1 µm/s, depending on the applied flame conditions.

*In-situ* functionalization of metal oxide, e.g. SnO₂ nanoparticles with noble metals, e.g. Pt or Pd, is an effective method for promoting the detection of CO and is possible by the versatile FSP technique. Functionalization of metal oxide, e.g. SnO₂, nanoparticles with, for example, 0.2 wt% noble metal, e.g. Pt, is performed in a single process, *in-situ,* during deposition of the sensing layers. The addition of a noble metal has no influence on (tin) oxide grain size, layer thickness and porosity. Functionalization improves the sensor performance, i.e. by increasing sensor in response to CO reproducibility by signal and analytical sensitivity both in dry and humid air. High sensing layer porosity is advantageous as the porosity provides a large interfacial area between the gas and the sensing layer.

For example, (30±3) µm SnO₂ porous layer thickness and 0.2 wt% Pt/SnO₂₋based sensors have analytical sensitivity to 10 ppm CO of 0.17 and 0.50, respectively. Accordingly, (30±3) µm SnO₂ and 0.2 wt% Pt/SnO₂-based sensors allow the CO detection with the precision of 7 ppm and 2 ppm, respectively at 400°C.

Comparing sensors based on the same material (pure and functionalized SnO₂) synthesized by the flame spray pyrolysis but deposited by different techniques (i.e. by screen-printing and direct FSP deposition) clearly shows the better performance of the FSP directly deposited sensors, i.e. direct *(in-situ*) deposition of pure and functionalized (doped) sensing materials.

Additionally, the flexibility of FSP in direct deposition of sensing layers offers a straightforward possibility to change the thickness of the deposited layer by varying the deposition time. Variation of deposition time does not change the net porosity of the layers, grain size or the chemical state of the additive, e.g. Pt. Accordingly, the FSP deposition method gives a unique possibility to adjust the sensor's characteristics by varying the deposition time and, consequently, the sensing layer thickness.

The inventive method enables the production of highly-crystalline (e.g. SnO₂) nano-powders with sub-micrometer grain sizes. The metal oxide nano-crystals may be functionalized by *in-situ* inclusion of noble metal clusters during the production of the nano-powders. Nano-crystalline tin-oxide can be directly in-*situ* deposited forming porous layers onto alumina sensor substrates. The as-obtained sensors exhibit extremely good homogeneity of the sensing layer and good sensor performance. This innovative process has obvious advantages such as superior control over the microstructure and morphology of the nano-powders compared to classical wet-chemistry methods. Furthermore, the process is clean and fast (minutes compared to days for comparable quantities) and also allows for *in-situ* functionalization. The direct deposition results in fully formed functionalized sensing layers on various substrates. The *in-situ* prepared sensors of pure SnO₂ and Pt doped SnO₂ are reproducible and have a very low detection limit for CO together with high sensor response. Control of the sensing layer thickness during the deposition process adds a further tool for tuning sensor performance in addition to its chemical composition. Furthermore, in principle, it is possible and straightforward to deposit a combination of different layers having different functions (e. g. filtering, sensing) in the same deposition process, enabling direct construction of fully functional sensors in very short times using a simple, clean and flexible fabrication process. Layer stacks of layers having different functionalities may easily be fabricated by changing the precursor substance during the deposition process and thus changing the aerosol composition.

The invention may be more fully understood by referring to the drawings. The drawings refer to specific examples only.
Fig. 1 shows a flame spray pyrolysis reactor;
Fig. 2 shows a schematic cross-section of a substrate and deposited layer
Fig. 3a - 3d show scanning electron microscopy images of deposited sensing layers.

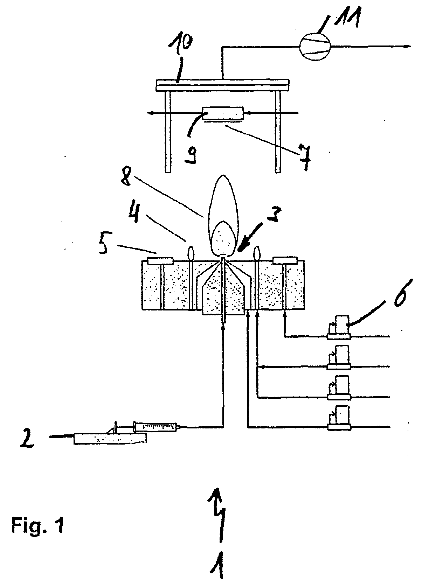

A schematic of a FSP reactor 1 is shown in **Figure 1.** The liquid precursor substance is fed by a delivery system, in this case a syringe pump 2 with a constant feed rate of 5 ml/min through a capillary of an outside-mixing two-phase nozzle 3. The liquid is dispersed into fine droplets with 5 l/min oxygen maintaining a pressure drop of 1.5 bar at the nozzle exit. The liquid spray is ignited by a premixed methane / oxygen (1.5 l/min / 3.2 l/min, respectively) flame ring 4 surrounding the nozzle exit. A sintered metal plate ring 5 issues additional 5 l/min of oxygen as a shield gas. All gas flow rates are controlled by calibrated mass flow controllers 6. A substrate 7 is disposed above the flame 8 and is held by a substrate holder 9, which is connected to cooling means. In the embodiment, the substrate holder 9 is embodied as water cooled copper block. The substrate holder 9 is located within a housing 10, which is connected to an exhaust vent 11.

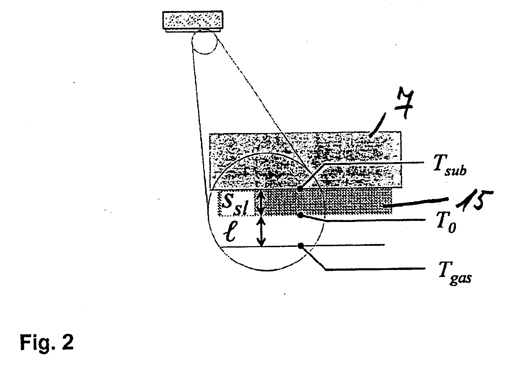

**Figure 2** shows the sensor substrate 7 having a constant temperature *(T*_{*sub*}*)* maintained by the water-cooling circuit. The gas temperature in front of the substrate (*T*_{*gas*}) is also constant and maintained by the heat of the spray flame 8. The surface temperature *(T*_{*0*}*)* of the sensing or particle layer 15 is equal to the substrate temperature at the beginning of the deposition process and approaches *T*_{*gas*} for large deposition heights (*S*_{*sl*}) due to the low thermal conductivity of the growing particle layer.

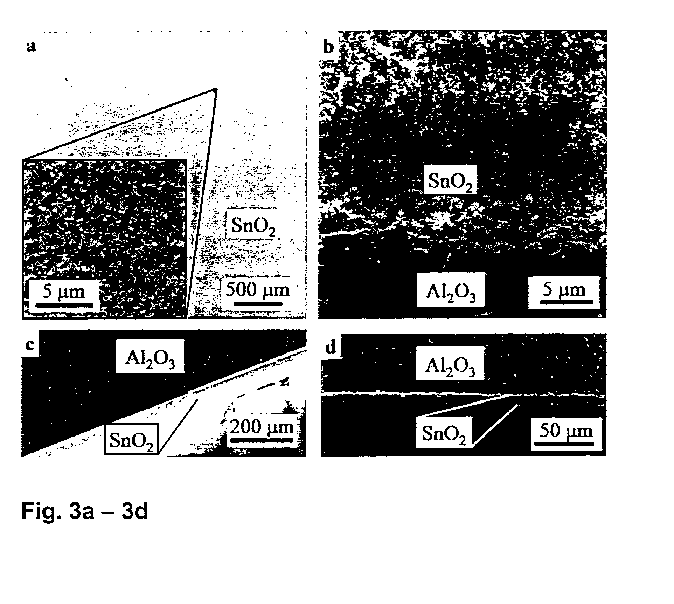

**Figures 3a - 3d** summarize the scanning electron microscopy (SEM) analysis of an SnO₂ deposit on a sensor substrate. Fig. 3 (a) shows a 3 x 3 mm² area from the surface of a sensor deposit after 180 seconds deposition. Within that large area, the deposit surface is homogeneous. There are no detectable cracks and no variation in the layer structure. The homogeneity of the surface layer results from the direct particle deposition. Particles are dry-deposited from the aerosol phase which avoids the need for any post-deposition evaporation step to remove substances once the layer has formed. The substrate temperature of 120°C avoids any water condensation which can lead to cracked films. This is a general advantage of the aerosol film preparation method in comparison to drop coating, dip and spin coating, and doctor blading where particles must be suspended initially in liquids. In such methods, the particle film is formed from rearrangement of the particles during solvent evaporation. This procedure causes internal stress in the plane of the substrate leading to bending of the substrate and/or cracking of the film.

The inset of Figure 3a shows a 100x magnification of the tin oxide deposit which reveals a very porous structure. *In-situ* sintering or coalescence of the tin oxide particles within the film structure is not expected as the gas deposition temperature, *T*_{gas} = 500°C, is much lower than the SnO₂ melting point (1130°C). The homogeneity of the film is also observed under higher magnification which was validated at different locations across the deposit (not shown). Figure 3(b) shows the same sensor from a side aspect (cleaved substrate). The dark zone is the corundum (substrate) while the conductive SnO₂ layer (deposit) appears brighter in the SEM image. The SnO₂ layer thickness is uniform over the observed cross section length of 0.7 mm (Figure 3c). Figure 3d shows a side view of a layer with 30 seconds deposition time for comparison with a 4 times higher magnification. Note the difference in thickness of 30 µm over 180 seconds (image c) to 9 µm over 30 seconds (image d). Figure 3(d) also reveals the highly crystalline structure of the corundum substrate.

## Claims

1. Method of producing a gas sensor comprising the steps of
a. Positioning a sensor substrate (7) in a flame spray pyrolysis apparatus (1);
b. Generating an aerosol phase comprising sensing material nanoparticles by flame spray pyrolysis (FSP) of a precursor substance;
c. Depositing the sensing material particles contained in the aerosol, in particular nanoparticles of the sensing material, onto the sensor substrate (7) directly from the aerosol phase to form a porous sensing layer (15) on the sensor substrate (7).

2. Method according to claim 1, **characterized in that** the sensing material is functionalized prior to deposition.

3. Method according to claim 1 or 2, **characterized in that** pure and functionalized sensing material, in particular nanoparticles of pure and functionalized sensing material, is synthesized by flame spray pyrolysis.

4. Method according to any of the preceding claims, **characterized in that** the sensing material is a metal oxide and/or a mixed metal oxide and/or at least one of said materials functionalized with a noble metal, in particular SnO₂, ZnO/SnO₂ and/or Pt/SnO₂.

5. Method according to any of the preceding claims, **characterized in that** prior to depositing the sensing material electrode assemblies are prefabricated on the sensor substrate (7).

6. Method according to any of the preceding claims, **characterized in that** a mask is applied to the substrate (7) before deposition in order to deposit the sensing material in the desired sensor area.

7. Method according to any of the preceding claims, **characterized in that** the substrate temperature (*T*_{*sub*}) is controlled during deposition, in particular kept at a constant temperature, preferably at 120°C.

8. Method according to any of the preceding claims, **characterized in that** the substrate (7) is located at the stagnation point of the impinging jet of the flame (8).

9. Method according to any of the preceding claims **characterized in that** the substrate (7) is being moved in spatial relation to a flame nozzle during deposition, in particular rotated.

10. Method according to any of the preceding claims, **characterized in that** the sensor substrate is positioned in the flame to give a deposition temperature which is lower than the melting point of the sensing material.

11. Method according to any of the preceding claims, **characterized in that** a stack of layers having different functionalities is deposited by changing the aerosol composition during deposition of the sensing material on the sensor substrate (7).

12. Sensor produced in a method according to any of the preceding claims comprising a porous sensing layer (15) deposited on a substrate (7) from an aerosol comprising sensing material particles, in particular nanoparticles.

13. Sensor according to claim 12, **characterized in that** the sensor substrate (7) is a ceramic or micro-machined substrate.

14. Sensor according to any of the preceding claims 12 or 13, **characterized in that** the sensor substrate comprises at least one prefabricated electrode assembly, in particular interdigitated electrodes.

15. Sensor according to any of the preceding claims 12 through 14, **characterized in that** the sensor substrate comprises a heater assembly, in particular on the back side of the active sensing area.

16. Sensor fabrication system comprising a flame spray reactor (1), a delivery system, in particular a precursor pump (2) and a precursor supply line connected to a nozzle (3), a flame ring (4) surrounding the nozzle exit and a sensor substrate holder (9) disposed above the nozzle (3).

17. Sensor fabrication system according to claim 16, **characterized in that** the sensor substrate holder (9) is connected to cooling means.

18. Sensor fabrication system according to any of the preceding claims 16 or 17, **characterized in that** the sensor substrate holder (9) is a water cooled copper block.
